# EUROPÄISCHE PATENTSCHRIFT

(11) **EP 0 828 898 B1**
(45) Veröffentlichungstag und Bekanntmachung des Hinweises auf die Patenterteilung: **28.02.2001**
(21) Anmeldenummer: 96917477.0
(22) Anmeldetag: 31.05.1996
(51) Int. Cl.: E02D 17/20

(54) **TEXTILER VERBUNDSTOFF**
TEXTILE COMPOSITE MATERIAL
MATERIAU TEXTILE COMPOSITE

(30) Priorität: 01.06.1995 DE 29509066 U
(43) Veröffentlichungstag der Anmeldung: 18.03.1998
(73) Patentinhaber: Huesker Synthetic GmbH & Co., 48712 Gescher (DE)
(72) Erfinder: WELKERS, Hans, D-48712 Gescher (DE); BÜNING, Bernhard, D-48703 Stadtlohn (DE)
(74) Vertreter: Freischem, Werner, Dipl.-Ing.
(86) Internationale Anmeldenummer: EP9602352
(87) Internationale Veröffentlichungsnummer: WO9638634

(56) Entgegenhaltungen:
- DE-A- 2 217 150
- DE-A- 3 728 255
- PATENT ABSTRACTS OF JAPAN vol. 8, no. 201 (M-325) [1638] , 14.September 1984 & JP,A,59 088540 (NIHON SHIYOKUSEI K.K.), 22.Mai 1984,

## Beschreibung

Die Erfindung bezieht sich auf einen textilen Verbundstoff zum Stabilisieren, Konsolidieren oder Armieren von Böden und Erdschichten sowie als lastaufnehmende Filterschicht, z. B. zum Abdecken einer Drainageschicht, mit einem Faservlies.

Faservliese, insbesondere Kunststoff-Faservliese werden im Erdbau, beispielsweise Deponiebau, sowie im Wasserbau häufig zum Trennen zweier Bodenschichten mit unterschiedlichen Körnungslinien eingesetzt. Je nach der Dicke und der Festigkeit des Vliesstoffes können unterschiedliche Filtereigenschaften erzielt werden. Kunststoff-Faservliese aus Grobfasern eignen sich als Drainschicht und werden häufig mit Filtervliesstoffen kombiniert.

Der Nachteil der Verwendung reiner Vliesstoffe bzw. Verbundstoffe aus unterschiedlichen Kunststoff-Faservliesen liegt in der begrenzten Lastaufnahme. Im Gegensatz zu Textilstoffen aus Endlosfäden (z. B. Gewebe oder Gewirke) weisen Faservliese eine erheblich größere Dehnung bei niedrigerer Reißfestigkeit auf. Selbst Textilstoffe wie Gewebe und Gewirke mit hoher Reißfestigkeit, die ebenfalls im Erdbau verwendet werden, weisen in der Regel ein ungünstiges Lastaufnahme-Verhalten auf, da eine Krafteinleitung in einen derartigen Textilstoff zunächst eine Längung des Stoffes durch Reckung der durch die Maschenbildung bzw. Verwebung in gebogenen Bahnen verlaufenden Fäden verursacht. Eine größere Lastaufnahme erfolgt erst, nachdem der Stoff erheblich gestreckt wurde.

Aus der DE-A-37 28 255 ist ein Erdankerband bekannt, welches als Drainagekörper ein lockeres Faservlies umfaßt, auf dessen Oberseite ein textiles Band mit zuglasttragenden Kettfäden durch Klammern oder Nähte befestigt ist. Das textile Band muß in einem eigenen Herstellungsschritt auf einer Web- oder Wirkmaschine hergestellt werden und dann mit dem Faservlies in einem zweiten Herstellungsschritt zusammengeführt und verbunden werden.

Aufgabe der Erfindung ist es, einen kostengünstigen textilen Verbundstoff mit mindestens einem Faservlies zu schaffen, der in einer Hauptbelastungsrichtung eine hohe Reißfestigkeit aufweist und ohne übermäßige Dehnung große Zugkräfte aufnehmen kann sowie ein Verfahren zu dessen Herstellung.

Diese Aufgabe wird erfindungsgemäß dadurch gelöst, daß auf dem Faservlies ausschließlich parallel verlaufende, lastaufnehmende gerade Kunststoff-Endlosfäden aufgewirkt, aufgenäht oder aufgeraschelt sind.

Bei der Verwendung textiler Verbundstoffe im Erd- und Wasserbau ergibt sich in aller Regel eine fest definierte Hauptlastrichtung, z. B. die Neigungsrichtung einer Böschung. Durch die simple Maßnahme des Aufbringens ausschließlich parallel verlaufender, gerader, lastaufnehmender Fäden aus Kunststoffmaterial wird der textile Verbundstoff in einer Richtung - der Hauptlastrichtung - hoch reißfest. Da die Stränge gerade gegen den Vliesstoff anliegen, werden sie bei einer Krafteinleitung sofort entgegen ihrer Eigenelastizität gedehnt und nicht - wie bei Geweben und Gewirken - zunächst mit einem sehr viel geringeren Widerstand gerade gereckt.

Die in Kettrichtung verlaufenden Kunststoff-Endlosfäden lassen sich in kostengünstiger Weise auf Näh-, Wirk- oder Raschelmaschinen mit einer Breite, die der Breite einer Vliesstoffbahn entspricht, auf das Faservlies aufbringen. Je nach Einsatzfeld und Anforderung an die Lastaufnahme des Verbundstoffes können geeignete Kunststoff-Endlosfäden gewählt werden. Eine besonders kostengünstige Lösung ist die Verwendung von Polypropylen-Spleißgarn als lastaufnehmender Faden und gegebenenfalls auch als Bindegarn für dessen Befestigung auf dem Faservlies, welches ebenfalls aus Polypropylen bestehen kann.

Je nach Material der lastaufnehmenden Fäden und dem Abstand dieser Fäden voneinander kann der Querschnitt der Fäden im Bereich von 2 bis 100 mm² liegen. Vorzugsweise haben die lastaufnehmenden Fäden einen Querschnitt von 4 bis 50 mm² und einen Abstand von 1 bis 100 mm zueinander.

Bei einer besonders bevorzugten Ausführungsform der Erfindung sind die lastaufnehmenden Fäden jeweils paarweise auf das Faservlies aufgeraschelt, wobei der Abstand zwischen zwei Paaren 1 bis 100 mm beträgt. Hierdurch kann die Menge des Bindegarns, welches zur Befestigung der lastaufnehmenden Fäden notwendig ist, reduziert werden. Zwar ist in diesem Fall die Verbindung zwischen dem Faservlies und den lastaufnehmenden Fäden lockerer als bei Einzelbefestigung der lastaufnehmenden Fäden, jedoch ist eine derartige Fixierung der lastaufnehmenden Fäden an dem Vliesstoff ausreichend. Sowohl die lastaufnehmende Fäden als auch das Faservlies werden im eingebauten Zustand durch den Druck der darüberliegenden Erdschichten in ihrer Lage gehalten.

Weitere Merkmale und Vorzüge der Erfindung ergeben sich aus der nun folgenden Zeichnungsbeschreibung. Die Zeichnungen zeigen in
- Fig. 1: die Draufsicht auf eine Ausführungsform des erfindungsgemäßten textilen Verbundstoffes und
- Fig. 2: den entlang der Schnittlinie II - II geschnittenen textilen Verbundstoff aus Fig. 1.

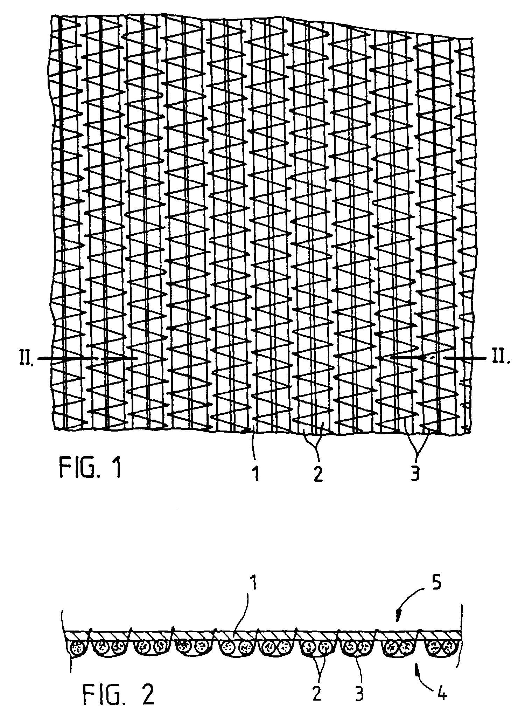

Der in den Fig. 1 und 2 dargestellte textile Verbundstoff besteht aus einem Faservlies 1. Dieses Faservlies 1 kann aus natürlichen Stoffen wie Kokos- oder Sisal-Fasern bestehen oder aber auch aus Kunststoff-Fasern, insbesondere aus Polyester-, Polypropylen- oder Polyetylen-Fasern. Auf einer Seite 4 des Faservlieses 1 sind paarweise lastaufnehmende Fäden 2 aus Polypropylen-Spleißgarn aufgeraschelt. Die Fäden 2 aus Polypropylen-Spleißgarn haben einen Durchmesser von etwa 3 mm und werden auf einer Raschelmaschine als Kette geführt und auf das Faservlies 1 gebracht. Ein dünnes Bindegarn 3 wird als maschenbildende Kette auf der Raschelmaschine geführt. Jede Maschenreihe übergreift zwei Fäden 2 auf der Seite 4 des Faservlieses 1 und weist auf der anderen Seite 5 des Faservlieses 1 die Bindungen zu den benachbarten Maschenreihen auf.

### Bezugszeichenliste:

- 1: Faservlies
- 2: lastaufnehmender Faden
- 3: Bindegarn
- 4: Vorderseite
- 5: Rückseite

## Patentansprüche

1. Textiler Verbundstoff zum Stabilisieren, Konsolidieren oder Armieren von Böden und Erdschichten sowie als lastaufnehmende Drän- oder Filterschicht, mit mindestens einem Faservlies (1), **dadurch gekennzeichnet,** daß auf dem Faservlies (1) ausschließlich parallel verlaufende, gerade, lastaufnehmende Kunststoff-Endlosfäden (2) aufgewirkt, aufgenäht oder aufgeraschelt sind.

2. Textiler Verbundstoff nach Anspruch 1, dadurch gekennzeichnet, daß die lastaufnehmenden Fäden (2) in Längsrichtung einer Bahn aus Faservlies (1) verlaufen.

3. Textiler Verbundstoff nach Anspruch 1 oder 2, **dadurch gekennzeichnet,** daß der Querschnitt der lastaufnehmenden Fäden (2) 4 bis 50 mm² beträgt.

4. Textiler Verbundstoff nach einem der Ansprüche 1 bis 3, **dadurch gekennzeichnet,** daß der Abstand zwischen den parallelen, lastaufnehmenden Fäden (2) 1 bis 100 mm beträgt.

5. Textiler Verbundstoff nach mindestens einem der vorangehenden Ansprüche, **dadurch gekennzeichnet,** daß die lastaufnehmenden Fäden (2) aus Polypropylen-Spleißgarn bestehen.

6. Textiler Verbundstoff nach mindestens einem der vorangehenden Ansprüche, **dadurch gekennzeichnet,** daß er ein Bindegarn (3) umfaßt, mit dem die lastaufnehmenden Fäden (2) auf das Faservlies (1) geraschelt, gewirkt oder genäht sind, aus Polypropylen-Spleißgarn besteht.

7. Textiler Verbundstoff nach mindestens einem der vorangehenden Ansprüche, **dadurch gekennzeichnet,** daß die lastaufnehmenden Fäden (2) jeweils paarweise auf das Faservlies (1) aufgeraschelt sind, wobei der Abstand zwischen den Fadenpaaren 1 bis 100 mm beträgt.

8. Textiler Verbundstoff nach einem der vorangehenden Ansprüche, **dadurch gekennzeichnet,** daß das Faservlies (1), die lastaufnehmenden Fäden (2) und ein Bindegarn (3), mit dem die lastaufnehmenden Fäden (2) aufgewirkt, aufgenäht oder aufgeraschelt sind, aus Polypropylen bestehen.

9. Verfahren zur Herstellung eines textilen Verbundstoffes nach einem der vorangehenden Ansprüche, **dadurch gekennzeichnet,** daß eine Bahn eines Faservlieses (1) einer Näh-, Wirk- oder Raschelmaschine zugeführt wird durch die Maschine in Richtung der Kette verlaufende Kunststoff-Endlosfäden an dem Faservlies (1) aufgenäht, aufgewirkt oder aufgeraschelt werden.

## Claims

1. A textile composite material used to stabilize, consolidate or reinforce soils and layers of earth and as a load-carrying drainage or filtration layer and comprising at least one nonwoven (1), **characterized in that** exclusively parallel, straight, load-carrying plastic filament strands (2) are knitted, sewed or Raschel-knitted onto the nonwoven (1).

2. A textile composite material according to Claim 1, **characterized in that** the load-carrying strands (2) extend in the lengthwise direction of a web of nonwoven (1).

3. A textile composite material according to Claim 1 or 2, **characterized in that** the cross section of the load-carrying strands (2) is 4 to 50 mm².

4. A textile composite material according to any of Claims 1 to 3, **characterized in that** the distance between the parallel, load-carrying strands (2) is 1 to 100 mm.

5. A textile composite material according to at least one of the preceding claims, **characterized in that** the load-carrying strands (2) are made of split polypropylene yarn.

6. A textile composite material according to at least one of the preceding claims, **characterized in that** it includes a binding yarn (3), with which the load-carrying strands (2) are Raschel-knitted, knitted or sewed onto the nonwoven (1), and which consists of split polypropylene yarn.

7. A textile composite material according to at least one of the preceding claims, **characterized in that** the load-carrying strands (2) are Raschel-knitted onto the nonwoven (1) respectively in pairs, the distance between pairs of strands being 1 to 100 mm.

8. A textile composite material according to any of the preceding claims, **characterized in that** the nonwoven (1), the load-carrying strands (2) and a binding yarn (3), with which the load-carrying strands (2) are knitted, sewed or Raschel-knitted, are made of polypropylene.

9. A method for the manufacture of a textile composite material according to any of the preceding claims, **characterized in that** a web of a nonwoven (1) is conveyed to a sewing, knitting or Raschel-knitting machine and that plastic filament strands extending in the direction of the warp are sewed, knitted or Raschel-knitted on the nonwoven (1).

## Revendications

1. Matériau textile composite pour stabiliser, consolider ou armer des sols et des couches de terre ainsi que comme couche porteuse de drainage ou de filtrage, avec au moins un non-tissé (1), caractérisé en ce que sur le non-tissé (1) sont tricotés, cousus ou cousus selon un procédé Rachel des filaments plastiques porteurs (2) exclusivement parallèles et rectilignes.

2. Matériau textile composite selon la revendication 1, caractérisé en ce que les fils porteurs (2) s'étendent dans la direction longitudinale d'une bande de non-tissé (1).

3. Matériau textile composite selon l'une des revendications 1 ou 2, caractérisé en ce que la section des fils porteurs (2) est de 4 à 50 mm².

4. Matériau textile composite selon l'une des revendications 1 à 3 caractérisé en ce que l'espace entre les fils porteurs (2) parallèles est de 1 à 100 mm.

5. Matériau textile composite selon l'une au moins des revendications précédentes, caractérisé en ce que les fils porteurs (2) sont composés de fils polypropylène fibrillés.

6. Matériau textile composite selon l'une au moins des revendications précédentes, caractérisé en ce qu'il comprend au moins un fil de liage (3), avec lequel les fils porteurs (2) sont cousus selon un procédé Rachel, tricotés ou cousus sur le non-tissé (1), et qui consiste en un fil polypropylène fibrillé.

7. Matériau textile composite selon l'une au moins des revendications précédentes, caractérisé en ce que les fils porteurs (2) sont cousus par paires selon un procédé Rachel sur le non-tissé (1), l'espace entre les paires de fils étant compris entre 1 et 100 mm.

8. Matériau textile composite selon l'une des revendications précédentes, caractérisé en ce que le non-tissé (1), les fils porteurs (2) et un fil de liage (3) au moyen duquel les fils porteurs sont tricotés, cousus ou cousus selon un procédé Rachel, sont en polypropylène.

9. Procédé pour la production d'un matériau textile composite selon l'une des revendications précédentes, caractérisé en ce qu'une bande d'un non-tissé (1) est amenée dans une machine à coudre, à tricoter ou dans un métier Rachel, les filaments plastiques parallèles à la chaîne étant cousus, tricotés ou cousus selon un procédé Rachel sur le non-tissé (1) au moyen de la machine.
